# EUROPÄISCHE PATENTSCHRIFT

(11) **EP 1 196 680 B1**
(45) Veröffentlichungstag und Bekanntmachung des Hinweises auf die Patenterteilung: **08.12.2004**
(21) Anmeldenummer: 00954290.3
(22) Anmeldetag: 29.06.2000
(51) Int. Cl.: F01N 3/20, G01L 19/04, G01L 9/00

(54) **VORRICHTUNG UND VERFAHREN ZUR ABGASNACHBEHANDLUNG MITTELS EINER AKTIVEN KATALYTISCHEN REDUKTION BEI EINER BRENNKRAFTMASCHINE**
DEVICE AND METHOD FOR AFTERTREATING THE EXHAUST GAS OF AN INTERNAL COMBUSTION ENGINE BY MEANS OF SELECTIVE CATALYTIC REDUCTION
DISPOSITIF ET PROCEDE POUR LE RETRAITEMENT DES GAZ D'ECHAPPEMENT D'UN MOTEUR A COMBUSTION INTERNE PAR L'INTERMEDIAIRE D'UNE REDUCTION CATALYTIQUE SELECTIVE

(30) Priorität: 19.07.1999 DE 19933798
(43) Veröffentlichungstag der Anmeldung: 17.04.2002
(73) Patentinhaber: Argillon GmbH, 96257 Redwitz (DE)
(72) Erfinder: WEIGL, Manfred, D-93161 Viehhausen (DE)
(74) Vertreter: Tergau & Pohl Patentanwälte
(86) Internationale Anmeldenummer: PCT/DE2000/002118
(87) Internationale Veröffentlichungsnummer: WO 2001/006098

(56) Entgegenhaltungen:
- EP-A- 0 831 315
- EP-A- 0 905 356
- DE-A- 4 432 577
- US-A- 4 567 773
- US-A- 5 367 875
- PATENT ABSTRACTS OF JAPAN vol. 010, no. 244 (E-430), 22. August 1986 (1986-08-22) & JP 61 073382 A (FUJIKURA LTD), 15. April 1986 (1986-04-15)

## Beschreibung

Die Erfindung betrifft eine Vorrichtung und ein Verfahren zur Abgasnachbehandlung bei einer Brennkraftmaschine gemäß den Oberbegriffen der Patentansprüche 1 bzw. 7.

Die Verminderung der Stickoxidemission einer mit Luftüberschuss arbeitenden Brennkraftmaschine, insbesondere einer Diesel-Brennkraftmaschine kann mit Hilfe der Selektiv-Catalytic-Reduction-Technologie (SCR) zu Luftstickstoff (N₂) und Wasserdampf (H₂0) erfolgen. Als Reduktionsmittel werden entweder gasförmiges Ammoniak (NH₃), Ammoniak in wässeriger Lösung oder Harnstoff in wässeriger Lösung eingesetzt. Der Harnstoff dient dabei als Ammoniakträger und wird mit Hilfe eines Dosiersystems vor einem Hydrolysekatalysator in das Auspuffsystem eingespritzt, dort mittels Hydrolyse zu Ammoniak umgewandelt, der dann wiederum in dem eigentlichen SCR- oder DENOX-Katalysator die Stickoxide reduziert.

Ein solches Dosiersystem weist als wesentliche Komponenten einen Reduktionsmittelbehälter, eine Pumpe, einen Druckregler, einen Drucksensor und ein Dosierventil auf. Die Pumpe fördert das in dem Reduktionsmittelbehälter bevorratete Reduktionsmittel zu dem Dosierventil, mittels dessen das Reduktionsmittel in den Abgasstrom stromaufwärts des Hydrolysekatalysators eingespritzt wird. Das Dosierventil wird über Signale einer Steuereinrichtung derart angesteuert, dass abhängig von Betriebsparametern der Brennkraftmaschine eine bestimmte, aktuell nötige Menge an Reduktionsmittel zugeführt wird (DE 197 43 337 C1).

Es ist ein Vorteil der in wässerigen Lösungen vorliegenden ammoniakfreisetzenden Substanzen, wie z.B. Harnstoff, dass die Bevorratung, die Handhabung, die Förder-und Dosierbarkeit technisch relativ einfach zu lösen sind. Ein Nachteil dieser wässerigen Lösungen besteht darin, daß in Abhängigkeit der Konzentration der gelösten Substanz die Gefahr des Einfrierens bei bestimmten Temperaturen besteht.

32%ige Harnstofflösung, wie sie typischerweise in SCR-Systemen als Reduktionsmittel verwendet wird, weist einen Gefrierpunkt von -11° C auf. Deshalb müssen Vorrichtungen zum Heizen des Dosiersystems vorgesehen werden um die Funktionsfähigkeit aller Systemkomponenten nach einem Systemstart bei Umgebungstemperaturen unter -11°C in einer akzeptablen Zeit sicherzustellen und zu verhindern, daß Systemkomponenten während des Betriebs einfrieren.

Eine der Hauptkomponenten ist der Harnstoffdrucksensor. Da mit diesem Drucksensor kontinuierlich das Harnstoffdrucksystem überwacht wird; insbesondere kann mit dem Drucksensor ein Einfrieren der Reduktionsmittelpumpe, der Verbindungsschläuche oder des Dosierventils erkannt werden, muß dieser Drucksensor zuverlässig aufgetaut und frostfrei gehalten werden. Das Drucksensorelement wird zweckmäßigerweise in räumlicher Nähe zur Steuerelektronik für das Dosiersystem und in der Nähe des Pumpenausganges verbaut. Trotzdem ist es nicht oder nur schwer möglich, den Drucksensor nur über die Heizung von Reduktionsmittelleitung, Reduktionsmittelpumpe und Eigenerwärmung der Steuerelektronik aufzutauen.

Aus der DE 44 32 577 A1 ist eine Einrichtung zur Vermeidung von Frostschäden an Teilen einer nach dem Prinzip der selektiven katalytischen Reduktion arbeitenden Abgasrei-nigungsanlage während der Stillstandszeiten und dem Er-möglichen des Betriebes solcher Anlagen unterhalb des Gefrierpunktes der verwendeten Reduktionsmittellösung bekannt. Hierzu weist die Einrichtung einen thermisch isolierten Vorratsbehälter für die Reduktionsmittellösung und eine daran angeschlossene Zuführungsleitung auf, die in einer Austrittsöffnung für die Flüssigkeit endet, wobei in der Zuführungsleitung ein Rückspül-Ventil vorgesehen ist, das mit einem unter Druck stehenden Gases beaufschlagbar ist. Der Vorratsbehälter und die Zuführungsleitung sind dabei mittels einer elektrischen Heizung, die einen Wärmetauscher mit Wärme versorgt, beheizbar.

In der JP-A61073382 ist ein Verfahren zur Temperaturkompensation eines Halbleiterdrucksensors beschrieben, auf dessen Diafragmaoberfläche mehrere Widerstände aufgebracht sind und die zur Druckmessung herangezogen werden. Um Änderungen der Umgebungstemperatur bei der Druckmessung zu eliminieren, sind Kompensationswiderstände vorgesehen. Diese Heizelemente dienen zur Temperaturkompensation bei sich ändernder. Umgebungstemperatur und nicht zur Beheizung der Drucksensormembran. Deshalb sind diese Heizelemente außerhalb der Sensormembran aufgebracht.

Der Erfindung liegt die Aufgabe zugrunde, eine Vorrichtung und ein Verfahren anzugeben, mit der bzw. mit dem Frostschäden an Teilen einer Abgasnachbehandlungsanlage vermieden werden, sowohl während der Stillstandszeit, als auch beim Betrieb einer solchen Anlage bei Temperaturen unterhalb des Gefrierpunktes der verwendeten Reduktionsmittellösung.

Diese Aufgabe wird für die Vorrichtung durch die Merkmale des Patentanspruches 1 und für das Verfahren durch die Merkmale des Anspruches 6 gelöst.

Die der Erfindung zugrundeliegende Idee beruht darin, die Drucksensormembran als Träger für Heizwiderstände und zur Temperaturmessung zu nutzen. Die Technologie für die Fertigung des Sensor-Widerstandsnetzwerkes wird benutzt, um zusätzlich Heiz- und Temperaturmesswiderstände aufzubringen.

Durch die Nutzung der Sensormembranfläche zur elektrischen Heizung der wässerigen Harnstofflösung wird zusätzlicher Bedarf an Einbauraum, Dichtstellen und Stecker für die elektrische Versorgung oder Ansteuerung vermieden.

Die elektrischen Heizwiderstände ermöglichen es, direkt die Sensormembran zu heizen und somit die Verfügbarkeit des Drucksensors schnellstmöglich sicherzustellen und den Druck des Harnstoffsystems bereits während der Auftauphase zu überwachen.

Die Mehrkosten für die Beheizbarkeit des Drucksensors sind relativ gering, da maximal ein zusätzliches Widerstands-Layer gedruckt werden muss, und nur ein zusätzlicher elektrischer Anschluss am Sensorelement benötigt wird.

Da der Drucksensor ohnehin elektrisch mit dem Steuergerät verbunden ist, ergeben sich für den elektrischen Anschluß der Heizung nur geringe Kosten.

Werden die Heizwiderstände mit einer Dickschichtpaste mit geeignetem Temperaturkoeffizienten gedruckt, dienen diese gleichzeitig als Temperatursensor. Da der Drucksensor ohnehin, wegen der Temperaturkompensation durch Lasertrimmen unter kontrollierten Temperaturen kalibriert wird, verursacht der Abgleich des Temperatursensors nur unwesentliche Mehrkosten. Andererseits kann bei bekanntem Temperaturgang des Drucksensors durch Messen der Sensortemperatur auf eine Temperaturkompensation verzichtet werden, was die Gesamtkosten des Sensors erheblich reduziert. Zur Temperaturmessung kann auch ein separater Temperatur-Meßwiderstand aufgebracht werden, was eine höhere Genauigkeit der Temperaturmessung ergibt, da der Wert des Widerstandes für diese Anwendung optimiert sein kann.

Weitere vorteilhafte Ausgestaltungen der Erfindung werden nachfolgend unter Bezugnahme auf die Zeichnung näher erläutert. Es zeigen:
- Figur 1: eine Blockdarstellung einer Brennkraftmaschine mit zugehöriger Abgasnachbehandlungsanlage, bei der der erfingsgemäße Drucksensor eingesetzt wird,
- Figur 2: eine schematische Darstellung einer Drucksensormembran und
- Figur 3: einen Schnitt durch ein Teil eines Pumpenmodulgehäuses mit integriertem Drucksensor

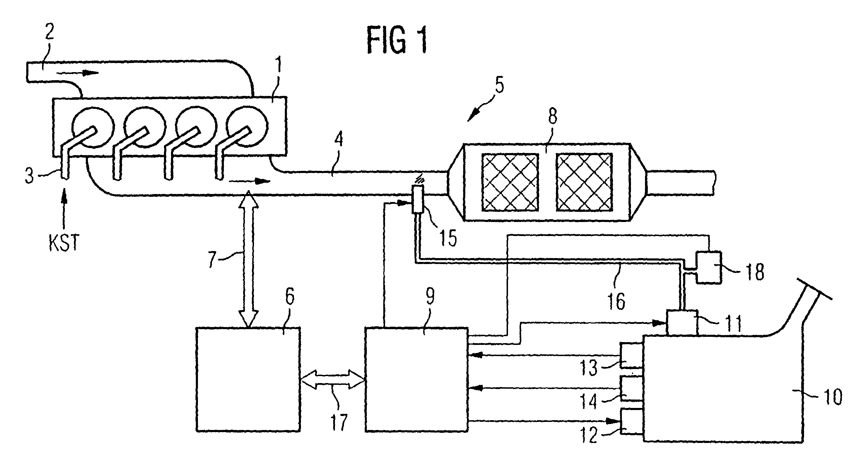

In Figur 1 ist in Form eines Blockschaltbildes sehr vereinfacht eine mit Luftüberschuß betriebene Brennkraftmaschine mit einer ihr zugeordneten Abgasnachbehandlungsanlage gezeigt. Dabei sind nur diejenigen Teile dargestellt, die für das Verständnis der Erfindung notwendig sind. Insbesondere ist auf die Darstellung des Kraftstoffkreislaufes verzichtet worden. In diesem Ausführungsbeispiel ist als Brennkraftmaschine eine Dieselbrennkraftmaschine gezeigt und als Reduktionsmittel zum Nachbehandeln des Abgases wird wässerige Harnstofflösung verwendet.

Der Brennkraftmaschine 1 wird über eine Ansaugleitung 2 die zur Verbrennung notwendige Luft zugeführt. Eine Einspritzanlage, die beispielsweise als Hochdruckspeichereinspritzanlage (Common rail) mit Einspritzventilen ausgebildet sein kann, die Kraftstoff KST direkt in die Zylinder der Brennkraftmaschine 1 einspritzen, ist mit dem Bezugszeichen 3 bezeichnet. Das Abgas der Brennkraftmaschine 1 strömt über eine Abgasleitung 4 zu einer Abgasnachbehandlungsanlage 5 und von diesem über einen nicht dargestellten Schalldämpfer ins Freie.

Zur Steuerung und Regelung der Brennkraftmaschine 1 ist ein an sich bekanntes Motorsteuergerät 6 über eine hier nur schematisch dargestellte Daten - und Steuerleitung 7 mit der Brennkraftmaschine 1 verbunden. Über diese Daten - und Steuerleitung 7 werden Signale von Sensoren (z.B. Temperatursensoren für Ansaugluft, Ladeluft, Kühlmittel, Lastsensor, Geschwindigkeitssensor) und Signale für Aktoren (z.B. Einspritzventile, Stellglieder) zwischen der Brennkraftmaschine 1 und dem Motorsteuergerät 6 übertragen.

Die Abgasnachbehandlungsanlage 5 weist einen Reduktionskatalysator 8 auf, der mehrere in Reihe geschaltete, nicht näher bezeichnete Katalysatoreinheiten beinhaltet. Stromabwärts und/oder stromaufwärts des Reduktionskatalysators 8 kann zusätzlich je ein Oxidationskatalysator angeordnet sein (nicht dargestellt). Ferner ist ein Dosiersteuergerät 9 vorgesehen, das einem Reduktionsmittelvorratsbehälter 10 mit einer elektrisch ansteuerbaren Reduktionsmittelpumpe 11 zum Fördern des Reduktionsmittels zugeordnet ist.

Als Reduktionsmittel dient in diesem Ausführungsbeispiel wässerige Harnstofflösung, die in dem Reduktionsmittelvorratsbehälter 10 gespeichert ist. Dieser weist eine elektrische Heizeinrichtung 12 und Sensoren 13,14 auf, welche die Temperatur der Harnstofflösung bzw. den Füllstand im Reduktionsmittelvorratsbehälter 10 erfassen. An das Dosiersteuergerät 9 werden außerdem noch die Signale eines stromaufwärts des Reduktionskatalysators 8 angeordneten Temperatursensors und eines stromabwärts des Reduktionskatalysators 8 angeordneten Abgasmeßaufnehmers, z.B. eines NOx-Sensors übergeben (nicht dargestellt).

Das Dosiersteuergerät 9 steuert ein elektromagnetisches Dosierventil 15 an, dem bedarfsweise über eine Zuführungsleitung 16 Harnstofflösung mit Hilfe der Reduktionsmittelpumpe 11 aus dem Reduktionsmittelvorratsbehälter 10 zugeführt wird. In die Zuführungsleitung 16 ist ein Drucksensor 18 eingefügt, der den Druck im Dosiersystem erfaßt und ein entsprechendes Signal an das Dosiersteuergerät 9 abgibt. Die Einspritzung der Harnstofflösung mittels des Dosierventiles 15 erfolgt in die Abgasleitung 4 stromaufwärts des Reduktionskatalysators 8.

Im Betrieb der Brennkraftmaschine 1 strömt das Abgas in der eingezeichneten Pfeilrichtung durch die Abgasleitung 4.

Das Dosiersteuergerät 9 ist zum gegenseitigen Datentransfer über ein elektrisches Bussystem 17 mit dem Motorsteuergerät 6 verbunden. Über das Bussystem 17 werden die zur Berechnung der zu dosierenden Menge an Harnstofflösung relevanten Betriebsparameter, wie z.B. Maschinendrehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät 9 übergeben.

Ausgehend von diesen Parametern und den Meßwerten für die Abgastemperatur und dem NOx-Gehalt berechnet das Dosiersteuergerät 9 die einzuspritzende Menge an Harnstofflösung und gibt über eine elektrische Verbindungsleitung 184 ein entsprechendes elektrisches Signal an das Dosierventil 15 ab. Durch die Einspritzung in die Abgasleitung 4 wird der Harnstoff hydrolysiert und durchmischt. In den Katalysatoreinheiten erfolgt die katalytische Reduktion des NOx im Abgas zu N₂ und H₂O.

Das Dosierventil 15 zum Einbringen der Harnstofflösung in die Abgasleitung 4 entspricht weitgehend einem üblichen Niederdruck-Benzineinspritzventil, das z.B. in eine mit einer Wandung der Abgasleitung 4 fest verbundenen Ventilaufnahmevorrichtung lösbar befestigt ist.

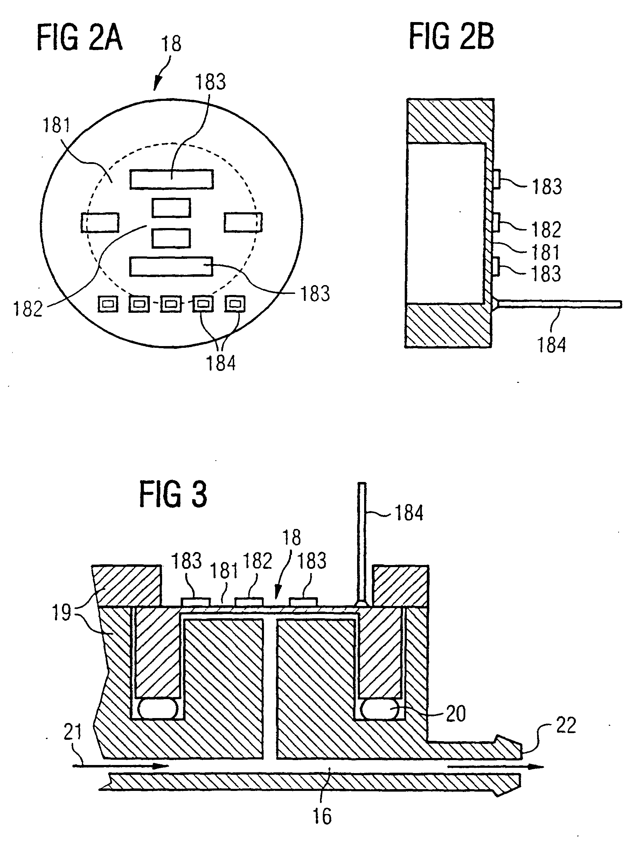

In Figur 2A ist eine typische Keramikdrucksensormembran 181 kreisförmigen Querschnittes des Drucksensors 18 von der dem unter Druck stehendem Medium (Reduktionsmittel) abgewandten Seite dargestellt. Figur 2B zeigt diese Keramikdrucksensormembran 181 im Schnitt. Für Druckmessungen in wässeriger Harnstofflösung sind wegen der chemischen Beständigkeit Sensorelemente aus Al₂O₃-Keramik besonders geeignet. Diese Sensorelemente bestehen aus einem Keramikformteil mit integrierter Sensormembran 181. Auf der Sensormembran 181 ist ein Widerstandsnetzwerk 182 in Dickschichttechnologie aufgebracht, welches die Sensor- und Kalibrierwiderstände enthält. Das Meßprinzip basiert auf dem Effekt der Widerstandsänderung bei mechanischer Verspannung der Sensormembran (Piezzoresistivität). Zur Kompensation von Temperaturabhängigkeiten können zusätzliche temperaturabhängige Widerstände vorgesehen sein.

Zur Heizung der Sensormembran 181 sind mit der gleichen Technologie zusätzliche elektrische Widerstände 183 aufgebracht. Auf der Sensormembran 181 sind genügend freie Flächen verfügbar, um diese elektrische Heizwiderstände 183 mit geeigneter Geometrie und Leistung aufzubringen. Bei Anwendungen mit geringem Bedarf an Heizleistung (kleiner 1 Watt) kann auch direkt durch Anlegen der Bordnetzspannung (ca. 14 Volt) anstelle der Referenzspannung von üblicherweise 5 Volt direkt am Sensorwiderstand geheizt werden.

Die Sensormembran 181 bietet ideale Voraussetzungen für diese Art der elektrischen Heizung, da Al₂O₃-Keramik eine hohe Wärmeleitfähigkeit besitzt und zudem die Sensormembran 181 prinzipbedingt sehr dünn ist. Die Sensormembran 181 stellt somit die optimale elektrische Isolierung der elektrischen Heizung von der beheizten wässerigen Harnstofflösung dar.

Die elektrischen Heizwiderstände 183 und das Sensorwiderstandsnetzwerk 182 werden über Anschlußpins und Anschlußleitungen 184 mit einer Auswerteelektronik bzw. Heizungsansteuerung, die vorzugsweise in dem Dosiersteuergerät 9 integriert ist, verbunden. Das Sensorelement kann auch mittels Bonddrähten oder durch direktes Einlöten mit dem Dosiersteuergerät 9 verbunden sein.

Fig. 3 zeigt einen Schnitt durch ein Teil des Pumpenmodulgehäuses 19 mit integriertem Drucksensor 18. Der Drucksensor 18 wird hier mittels einer O-Ring-Dichtung 20 im Gehäuse 19 abgedichtet. Von der Reduktionsmittelpumpe 11 gelangt Reduktionsmittel über den Zulauf 21 zur Drucksensormembran 181 des Drucksensors 18. Über einen Schlauchanschluß 22 wird das Dosierventil 15 mit Reduktionsmittel versorgt. Der Fluß des Reduktionsmittels ist dabei mit einem Pfeilsymbol eingezeichnet.

Bei einem Start der Brennkraftmaschine wird vom Dosiersteuergerät 9 die Einsatzbereitschaft jeder einzelnen Komponente des Reduktionsmitteldosiersystems geprüft. Beim Drucksensor 18 wird dazu die Temperatur gemessen. Ist die Temperatur der Drucksensormembran 181 so niedrig, daß mit einem eingefrorenem Drucksensor zu rechnen ist, wird die Sensorheizung aktiviert, d.h. an die elektrischen Heizwiderstände 183 eine Spannung angelegt. Wegen hoher Temperaturgradienten in der Drucksensormembran während einer Heizphase kann bei üblichen Drucksensoren in dieser Phase weder der Druck noch die Temperatur gemessen werden. Nach einer festgelegten Zeit wird die Heizung abgeschaltet und die Temperatur erneut gemessen. An der Temperaturveränderung kann nun eindeutig erkannt werden, ob Reduktionsmittel im gefrorenen Zustand vorgelegen hat, oder sogar immer noch teilweise gefroren ist. Im letzeren Fall stellt sich am Drucksensor nach einer kurzen Wartezeit exakt die Schmelztemperatur des Reduktionsmittels ein. Dieser Zustand kann genutzt werden, um den Sensor in einer Selbstlernfunktion durch Ablegen eines Korrekturwertes in einem nichtflüchtigen Speicher des Dosiersteuergerätes 9 sehr genau auf den Schmelzpunkt zu eichen. Der Heizvorgang wird bis zum vollständigen Auftauens des Reduktionsmittelvolumens im Drucksensor wiederholt. Kann die Temperaturmessung kontinuierlich während der Heizphase durchgeführt werden, kann durch Auswertung der Temperaturänderung pro Zeiteinheit ebenfalls sowohl der Schmelzpunkt als auch der Zeitpunkt des vollständigen Auftauens des Reduktionsmittelvolumens im Sensor ermittelt werden.

Liegt die Temperatur der Sensormembran eindeutig über dem Gefrierpunkt des Reduktionsmittels, wird das Drucksignal auf Plausibilität geprüft und das System ohne Sensorheizung in Betrieb gesetzt. Durch Auswertung der Reaktion des Drucksignals auf Pumpen- und Dosierventilansteuerung kann die Betriebsbereitschaft dieser Komponenten bei tiefen Temperaturen überwacht werden.

Da der piezzoresistive Drucksensor während und unmittelbar nach der Heizphase wegen zu hoher Temperaturgradienten keine korrekte Druckmessung erlaubt, wird die Sensorheizung nur für die Auftauphase aktiviert. Um ein Einfrieren des Sensors während des Betriebs des Reduktionsmitteldosiersystems bei tiefen Temperaturen zu vermeiden, wird der Drucksensor thermisch ausreichend isoliert verbaut und durch Abwärme von Reduktionsmittelpumpe, Leistungselektronik und eventueller Heizung der Zuführungsleitungen (z.B. Schlauchheizung) über dem Gefrierpunkt des verwendeten Reduktionsmittels gehalten.

In dem beschriebenen Ausführungsbeispiel nach der Figur 3 bilden die Reduktionsmittelpumpe 11 und der Drucksensor 18 eine gemeinsame Baugruppe, um die Kosten für Gehäuseteile und Leitungen zu senken und den Montageaufwand zu verringern. Es ist aber auch möglich, daß die Reduktionsmittelpumpe 11 und der Drucksensor 18 als getrennte Funktionseinheiten ausgebildet sind.

Ebenso ist es möglich, die Funktionen des Dosiersteuergerätes 9 für das Reduktionsmitteldosiersystem in das Motorsteuergerät 6 der Brennkraftmaschine zu integrieren.

## Patentansprüche

1. Vorrichtung zur Abgasnachbehandlung mittels der selektiven katalytischen Reduktion von Stickoxiden aus dem Abgas einer mit Luftüberschuss arbeitenden Brennkraftmaschine (1) durch Einbringen eines flüssigen Reduktionsmittels in das Abgas der Brennkraftmaschine (1) mit
- einem Reduktionskatalysator (8) zum Reinigen der Abgase
- einem Reduktionsmittelbehälter(10) zur Bevorratung des Reduktionsmittels,
- einer Reduktionsmittelpumpe (11) zum Fördern des Reduktionsmittels,
- einem Dosierventil (15) zum Einbringen des Reduktionsmittels stromaufwärts eines Reduktionskatalysators (8),
- einer Zuführungsleitung (16) zwischen der Reduktionsmittelpumpe (11) und dem Dosierventil (15),
- einem Dosiersteuergerät (9) zum bedarfsorientierten Steuern der Reduktionsmittelzugabe **gekennzeichnet durch** einen den Druck des Reduktionsmittels erfassenden, elektrisch beheizbaren Drucksensor (18), wobei zur Beheizung des Drucksensors (18) elektrische Heizwiderstände (183) vorgesehen sind, die auf der Drucksensormembran (181) des Drucksensors (18) aufgebracht sind.

2. Vorrichtung nach Anspruch 1, **dadurch gekennzeichnet, dass** auf der Drucksensormembran (181) des Drucksensors (18) elektrische Widerstände zum Erfassen der Temperatur des Reduktionsmittels aufgebracht sind.

3. Vorrichtung nach Anspruch 1 oder 2, **dadurch gekennzeichnet, dass** die Sensormembran (181) aus einer Al₂O₃ -Keramik besteht.

4. Vorrichtung nach Anspruch 1, **dadurch gekennzeichnet, dass** der Drucksensor (18) in der Zuführungsleitung (16) angeordnet ist.

5. Vorrichtung nach Anspruch 1, **dadurch gekennzeichnet, dass** der Drucksensor (18) und die Reduktionsmittelpumpe (11) zu einer baulichen Einheit innerhalb eines gemeinsamen Gehäuses (19) zusammengefasst sind.

6. Verfahren zur Abgasnachbehandlung mittels der selektiven katalytischen Reduktion von Stickoxiden aus dem Abgas einer mit Luftüberschuss arbeitenden Brennkraftmaschine (1) durch Einbringen eines flüssigen Reduktionsmittels in das Abgas der Brennkraftmaschine (1) bei dem
- das Reduktionsmittel aus einem Reduktionsmittelbehälter(10) durch eine Reduktionsmittelpumpe (11) gefördert wird und bei bestimmten Betriebszuständen der Brennkraftmaschine stromaufwärts eines im Abgas der Brennkraftmaschine liegenden Reduktionskatalysators (8) mittels eines Dosierventiles (15) zugemessen wird, **dadurch gekennzeichnet, dass**
- der Druck des Reduktionsmittels mit Hilfe eines Drucksensors (18) erfasst wird und
- bei einer Temperatur des Drucksensors (18), die nahe oder unterhalb des Gefrierpunktes des Reduktionsmittels liegt, der Drucksensor (18) mittels einer elektrischen Heizeinrichtung (183) beheizt wird, wobei die mittels elektrischen Heizwiderstände (183) auf der Drucksensormembran (181), des Drucksensors (18) aufgebracht sind.

7. Verfahren nach Anspruch 6, **dadurch gekennzeichnet, dass** zum Erfassen der Temperatur des Drucksensors (18) die elektrischen Heizwiderstände (183) auf der Drucksensormembran (181) verwendet werden.

8. Verfahren nach Anspruch 7, **dadurch gekennzeichnet, dass** zum Erfassen der Temperatur des Drucksensors (18) zusätzliche elektrische Widerstände auf der Drucksensormembran (181) verwendet werden.

## Claims

1. A device for exhaust-gas aftertreatment by means of the selective catalytic reduction of nitrogen oxides from the exhaust gas of an internal-combustion engine (1) operating with excess air by introducing a liquid reducing agent into the exhaust gas of the internal-combustion engine (1), with
- a reducing catalytic converter (8) for cleaning the exhaust gases,
- a reducing-agent container (10) for storing the reducing agent,
- a reducing-agent pump (11) for conveying the reducing agent,
- a metering valve (15) for introducing the reducing agent upstream of a reducing catalytic converter (8),
- a feed line (16) between the reducing-agent pump (11) and the metering valve (15),
- a metering control unit (9) for controlling the addition of reducing agent in demand-oriented manner, **characterised by** an electrically heatable pressure sensor (18) which registers the pressure of the reducing agent, whereby for the purpose of heating the pressure sensor (18) electrical heating resistors (183) are provided which are applied on the pressure-sensor diaphragm (181) of the pressure sensor (18).

2. Device according to Claim 1, **characterised in that** electrical resistors for registering the temperature of the reducing agent are applied on the pressure-sensor diaphragm (181) of the pressure sensor (18).

3. Device according to Claim 1 or 2, **characterised in that** the sensor diaphragm (181) consists of an Al₂O₃ ceramic.

4. Device according to Claim 1, **characterised in that** the pressure sensor (18) is arranged in the feed line (16).

5. Device according to Claim 1, **characterised in that** the pressure sensor (18) and the reducing-agent pump (11) are combined to form a structural unit within a common housing (19).

6. A process for exhaust-gas aftertreatment by means of the selective catalytic reduction of nitrogen oxides from the exhaust gas of an internal-combustion engine (1) operating with excess air by introducing a liquid reducing agent into the exhaust gas of the internal-combustion engine (1), wherein
- the reducing agent is conveyed out of a reducing-agent container (10) by a reducing-agent pump (11) and in certain operating states of the internal-combustion engine is metered upstream of a reducing catalytic converter (8) situated in the exhaust gas of the internal-combustion engine by means of a metering valve (15), **characterised in that**
- the pressure of the reducing agent is registered with the aid of a pressure sensor (18) and
- at a temperature of the pressure sensor (18) that lies close to or below the freezing-point of the reducing agent the pressure sensor (18) is heated by means of an electrical heating arrangement (183), the electrical heating resistors (183) being applied on the pressure-sensor diaphragm (181) of the pressure sensor (18).

7. Process according to Claim 6, **characterised in that** the electrical heating resistors (183) on the pressure-sensor diaphragm (181) are used for the purpose of registering the temperature of the pressure sensor (18).

8. Process according to Claim 7, **characterised in that** additional electrical resistors on the pressure-sensor diaphragm (181) are used for the purpose of registering the temperature of the pressure sensor (18).

## Revendications

1. Dispositif de post-traitement de gaz d'échappement au moyen de la réduction catalytique sélective d'oxydes d'azote provenant des gaz d'échappement d'un moteur (1) à combustion interne fonctionnant avec un excès d'air, par introduction d'un agent réducteur liquide dans les gaz d'échappement du moteur (1 ) à combustion interne, comprenant
- un pot catalytique (8) de réduction pour l'épuration des gaz d'échappement,
- un récipient (10) d'agent réducteur pour en mettre en réserve,
- une pompe (11) d'agent réducteur pour véhiculer l'agent réducteur,
- une vanne (15) de dosage pour introduire l'agent réducteur en amont d'un pot catalytique (8) de réduction,
- un conduit (16) d'entrée entre la pompe (11) d'agent réducteur et la vanne (15) de dosage,
- un appareil (9) de réglage du dosage pour régler en fonction des besoins l'addition d'agent réducteur, **caractérisé par** un capteur (18) de pression relevant la pression de l'agent réducteur et pouvant être chauffé de façon électrique, des résistances (183) électriques de chauffage, qui sont déposées sur la membrane (181) du capteur (18) de pression, étant prévues pour chauffer le capteur (18) de pression.

2. Dispositif suivant la revendication 1, **caractérisé en ce qu'**il est déposé sur la membrane (181) du capteur (18) de pression des résistances électriques destinées à relever la température de l'agent réducteur.

3. Dispositif suivant la revendication 1 ou 2, **caractérisé en que** la membrane (181 ) du capteur est en une céramique en Al₂O₃.

4. Dispositif suivant la revendication 1, **caractérisé en ce que** le capteur (18) de pression est monté dans le conduit (16) d'entrée.

5. Dispositif suivant la revendication 1, **caractérisé en ce que** le capteur (18) de pression et la pompe (11) d'agent réducteur sont rassemblés en une unité de construction dans un boîtier (19) commun.

6. Procédé de post-traitement des gaz d'échappement au moyen de la réduction catalytique sélective d'oxydes d'azote provenant des gaz d'échappement d'un moteur (1) à combustion interne fonctionnant avec un excès d'air, par introduction d'un agent réducteur liquide dans le gaz d'échappement du moteur (1) à combustion interne dans lequel
- on véhicule par une pompe (11 ) d'agent réducteur l'agent réducteur à partir d'un récipient (10) d'agent réducteur et pour certains états de fonctionnement du moteur à combustion à interne, on l'ajoute en amont d'un pot catalytique (8) de réduction se trouvant dans les gaz d'échappement du moteur à combustion interne au moyen d'une vanne (15) de dosage, **caractérisé en ce que**
- on relève la pression de l'agent réducteur à l'aide d'un capteur (18) de pression et,
- pour une température du capteur (18) de pression qui est proche du point de congélation de l'agent réducteur ou qui est inférieure au point de congélation de l'agent réducteur, on chauffe le capteur (18) de pression au moyen d'un dispositif (183) électrique de chauffage, les résistances (183) électriques de chauffage étant déposées sur la membrane (181) du capteur (18) de pression.

7. Procédé suivant la revendication 6, **caractérisé en ce que** pour relever la température du capteur (18) de pression, on utilise les résistances (183) électriques de chauffage sur la membrane (181) du capteur de pression.

8. Procédé suivant la revendication 7, **caractérisé en ce que**, pour relever la température du capteur (18) de pression, on utilise des résistances électriques supplémentaires sur la membrane (181) du capteur de pression.
